# EUROPEAN PATENT SPECIFICATION

(11) **EP 1 806 644 B1**
(45) Date of publication and mention of the grant of the patent: **03.07.2013**
(21) Application number: 06121736.0
(22) Date of filing: 04.10.2006
(51) Int. Cl.: G06F 1/16

(54) **Multi-configuration portable electronic device and guiding module thereof**
Tragbares elektronisches Gerät mit mehreren Konfigurationen und Führungsmodul dafür
Dispositif électronique portatif à configurations multiples et module de guidage

(30) Priority: 08.12.2005 CN 200510130445
(43) Date of publication of application: 11.07.2007
(73) Proprietor: HTC Corporation, Taoyuan County 330 (TW)
(72) Inventor: Wang, John C., Taoyuan Hsien (TW); Chen, Ching-Shih, Taoyuan Hsien (TW); Shih, Chin-Chung, Taoyuan Hsien (TW); Tun, Yun-Long, Taoyuan Hsien (TW); Wang, Yi-Shen, Taoyuan Hsien (TW); Huang, Ming-San, Taoyuan Hsien (TW)
(74) Representative: Viering, Jentschura & Partner

(56) References cited:
- US-A1- 2004 127 266
- US-A1- 2005 168 923

## Description

### BACKGROUND

### Field of Invention

The present invention relates to a portable electronic device and a guiding module thereof, and more particularly, to a multi-configuration portable electronic device and a guiding module thereof.

### Description of Related Art

Portable electronic devices, such as cell phones, personal digital assistants, notebook computers, video-game devices and media players are widely used and have recently become popular with the public. Integrating different portable functions and increasing the functions in a single portable electronic device are the trend of development of the portable electronic device. However, different portable electronic devices usually have different displays and the input type, for example a cell phone usually has a standard numerical keypad and an upright screen, and a notebook computer has a lateral screen with a more complex keyboard.

A multi-configuration portable electronic device including a dual-axis hinge has already been developed. One axis of the dual-axis hinge acts when the multi-configuration portable electronic device is in a landscape configuration or in a portrait configuration. However, the conventional multi-configuration portable electronic device has some disadvantages. For example, the axes of the dual-axis hinge form protruded structures on the surface of the multi-configuration portable electronic device when the multi-configuration portable electronic device is opened,. Those protruded structures influence the appearance and operating convenience of the multi-configuration portable electronic device.

Moreover, when the conventional multi-configuration portable electronic device is opened, the axes of the dual-axis hinge are prevented from acting simultaneously, which may place the device in an abnormal state.

### SUMMARY

It is an aspect of the present invention to provide a multi-configuration portable electronic device, which can be used in a landscape configuration or a portrait configuration according to the needs of users, in order to increase the device value.

It is another aspect of the present invention to provide a multi-configuration portable electronic device, which has no protruded structures thereon, so as to obtain a good appearance and enhance the operating convenience for users.

It is still another aspect of the present invention to provide a guiding module, which can be disposed on a multi-configuration portable electronic device to prevent the multi-configuration device from acting in an abnormal state.

Accordingly, the present invention provides a mufti-configuration portable electronic device that includes a first body, a second body, a dual-axis hinge and at least one guiding module. The dual-axis hinge has a first axis pivotally coupled to the first body and a second axis pivotally coupled to the second body. The guiding module prevents the first axis and the second axis from acting simultaneously. The guiding module includes a track disposed in the first body and a slide connected with the second body. The slide has an interaction force with the track so that the slide can move from the second body to couple with the track.

According to preferred embodiments, the guiding module includes an elastic device disposed between the second body and the slide in order to retract the slide into the second body.

According to preferred embodiments, the elastic device comprises a spring.

According to preferred embodiments, the first axis is not coplanar with the second axis.

According to preferred embodiments, the track includes a track base disposed in the first body and a cylinder disposed on the track base.

According to preferred embodiments, the track base has an arc-shaped track disposed thereon.

According to preferred embodiments, the slide has a first U-shaped coupling portion coupled with the cylinder and a second U-shaped coupling portion coupled with the arc-shaped track.

According to preferred embodiments, the track includes a decorative slide disposed on the arc-shaped track.

According to preferred embodiments, the second body has at least one positioning pin and the slide has at least a hole, so that the elastic device and the first slide can be disposed in the second body.

According to preferred embodiments, the first body includes an input device and the second body includes a display.

According to preferred embodiments, the interaction force comprises a magnetic force.

The present invention also provides a guiding module applied to a portable electronic device with a first body and a second body. The guiding module includes a track disposed in the first body and a slide connected to the second body. The slide has an interaction force with the track so that the slide can move from the second body to couple with the track.

According to preferred embodiments, the dual-axis hinge has a first joint pivotally coupled to the first body and a second joint pivotally coupled to the second body. The multi-configuration portable electronic device can be used in a landscape configuration or a portrait configuration according to the needs of users.

According to preferred embodiments, the multi-configuration portable electronic device has a guiding module, which can be disposed on a multi-configuration portable electronic device to prevent the axes of the dual-axis hinge from acting simultaneously and ensure the multi-configuration portable electronic device acts in a proper way.

According to preferred embodiments, the first joint is not coplanar with the second joint and the guiding module has an elastic device to retract the slide into the second body. Therefore, the dual-axis hinge and the guiding module would not form a protruded structure on the multi-configuration portable electronic device.

It is to be understood that both the foregoing general description and the following detailed description are by examples and are intended to provide further explanations of the invention as claimed.

### BRIEF DESCRIPTION OF THE DRAWINGS

These and other features, aspects and advantages of the invention will become apparent by reference to the following description and accompanying drawings, which are given by way of illustration only, and thus are not limitative of the invention, wherein:
Fig. 1 illustrates a preferred embodiment of the multi-configuration portable electronic device in a closed configuration according to the present invention;
Fig. 2 is a part schematic and exploded view of the multi-configuration portable electronic device in Fig. 1;
Fig. 3 is a schematic perspective view of the multi-configuration portable electronic device in a landscape configuration; and
Fig. 4 is a schematic perspective view of the multi-configuration portable electronic device in a portrait configuration.

### DESCRIPTION OF THE PREFERRED EMBODIMENTS

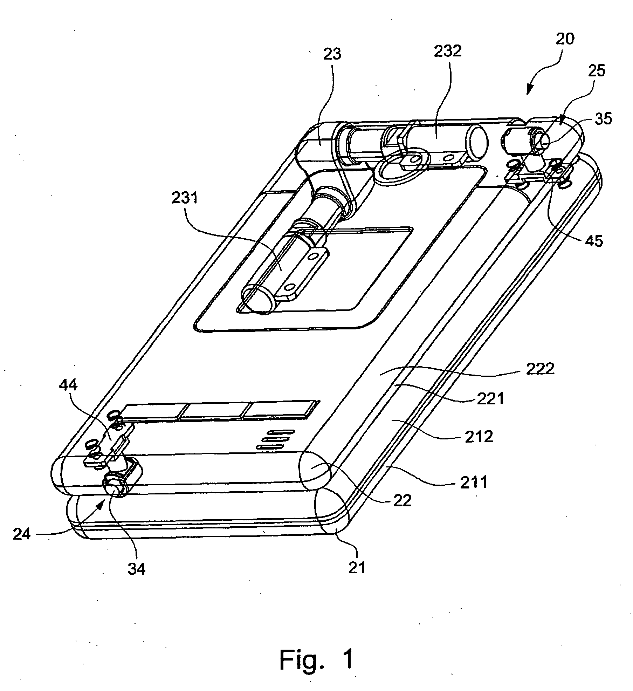

Fig. 1 illustrates a preferred embodiment of the multi-configuration portable electronic device according to the present invention. It is therefore an objective of the present invention to provide a bi-directional and dual-axis hinge. When the dual-axis hinge is applied to the portable electronic product, the upper cover and the body are foldable in at least two directions. Referring to FIG. 1, the multi-configuration portable electronic device 20 in a closed configuration includes a first body 21, a second body 22, a dual-axis hinge 23 having a first joint 231 and a second joint 232, a first guiding module 24 and a second guiding module 25. In addition, the dual axis hinge 23 is configured to engage the first body 21 to the second body 22. The first joint 231 is pivotally coupled to the first body 21 and the second joint 232 is pivotally coupled to the second body 22. The multi-configuration portable electronic device 20 cab be operated in a landscape configuration and a portrait configuration, in the former, the second body 22 rotates on the first joint 231, in the latter, the second body 22 rotates on the second joint 232. The first joint 231 is not coplanar with the second joint 232. Therefore, the first joint 231 and the second joint 232 would not form a protruded structure on the first body 21 or the second body 22.

With continued reference to Fig. 1, multi-configuration portable electronic device 20 includes a first guiding module 24 with a first track 34 and a first slide 44 and a second guiding module 25 with a second track 35 and a second slide 45. The first track 34 is disposed in the first body 21 and the first slide 44 is connected with the second body 22. The second track 35 is disposed in the second body 22 and the second slide 45 is connected with the first body 21. When the multi-configuration portable electronic device 20 is in the closed configuration, the first slide 44 is coupled with the first track 34 and the second slide 45 is coupled with the second track 35.

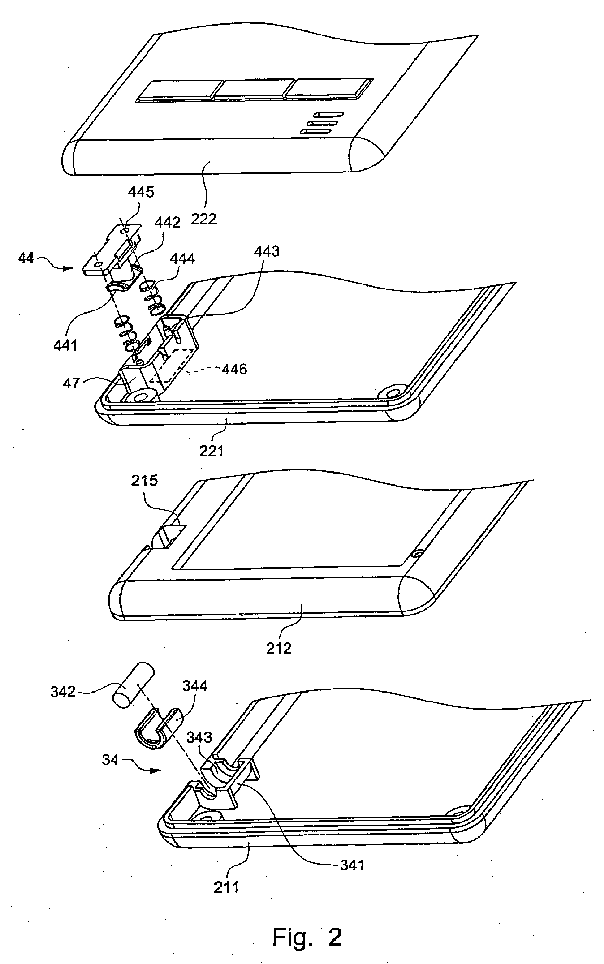

Fig. 2 is a part, schematic, exploded view of the multi-configuration portable electronic device in Fig. 1. Referring to Fig. 1 and Fig. 2, the first track 34 includes a track base 341 disposed on the first housing 211 and a cylinder 342 disposed on the track base 341. The track base 341 has an arc-shaped track 343 disposed thereon. The first slide 44 has a first U-shaped coupling portion 441 adapted to couple with the cylinder 342 and a second U-shaped coupling portion 442 adapted to couple with the arc-shaped track 343 respectively.

Referring to Fig. 1 and Fig. 2, an interaction force between the first track 34 and the first slide 44 causes the first slide 44 to move from a first location 47 of the first housing 211 and couple with the first track 34. For example, the cylinder 342 is made of a magnetic material and the first slide 44 is made of magnetic susceptible material. When the first slide 44 approaches the first track 34, the first slide 44 and the cylinder 342 are mutually attracted such that the first slide 44 can pass through the opening 446 of the third housing 221, the opening 215 of the second housing 212 and couple with the cylinder 342. When the first joint 231 rotates, the first U-shaped coupling portion 441 and the second U-shaped coupling portion 442 of the first slide 44 are coupled with the cylinder 342 and the arc-shaped track 343 respectively.

With continued reference to Fig. 1 and Fig. 2, at least one elastic device 444, such as a spring, is disposed between the second body and the first slide 44 in order to retract the first slide 44 into the second body 22. For example, the third housing has at least one positioning pin 443. The elastic device 444 is disposed on the positioning pin 443. Besides, the first slide 44 has at least one hole 445. The positioning pin 443 perforates the elastic device 444 and the hole 445, so that the elastic device 444 and the first slide 44 can be disposed in the second body 22. Accordingly, when the first slide 44 is apart from the first track 34, the first slide 44 is pushed by the elastic device 444 and retracted into the second body 22. Hence, the first slide 44 would not form a protruded structure on the second body 22. It is worth noting that the second slide 45 is similar to the first slide 44.

With continued reference to Fig. 2, the first track 34 has a decorative slide 344 disposed on the arc-shaped track 343. When the first slide 44 is coupled with the first track 34, the first slide 44 can push the decorative slide 344 so as to prevent the cylinder 342 from being exposed and improving the appearance of the multi-configuration portable electronic device 20.

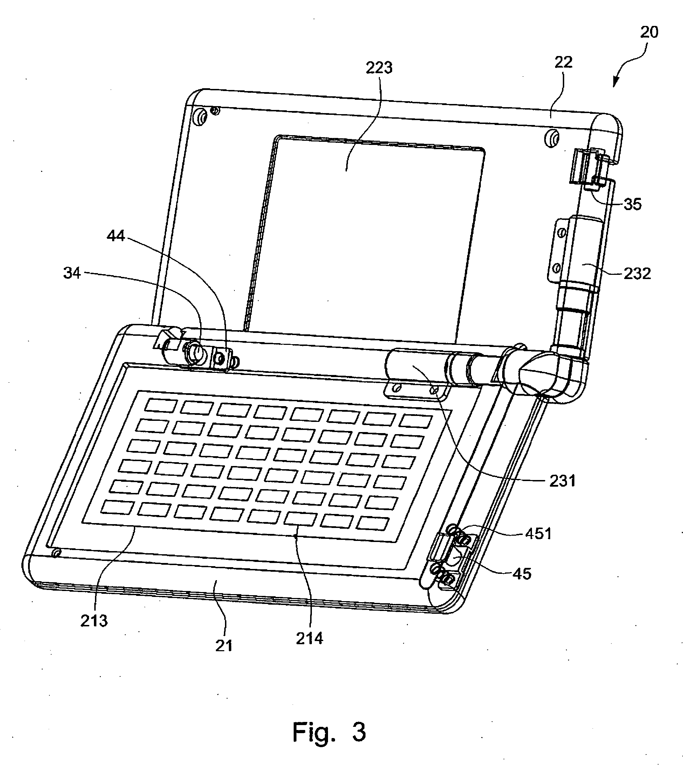

Fig. 3 is a schematic perspective view of the multi-configuration portable electronic device in Fig. 1, which is in the landscape configuration. Referring to Fig. 3, the first body 21 includes an input device 213 having a plurality of buttons 214 and the second body 22 includes a display 223. When the first joint 231 acts, the first slide 44 is coupled with the first track 34 and the second slide 45 is separated from the second track 35. The first slide 44 and the first track 34 constrain the rotation of the second joint 232 so as to guide the multi-configuration portable electronic device 20 to be in the landscape configuration. Moreover, the second slide 45 is pushed by the elastic device 451 and retracted into the first body 21. Hence, the second slide 45 would not form a protruded structure on the first body 21. The multi-configuration portable electronic device 20 is suitable for viewing a wide document and utilizing the input device 213 to input data in the landscape configuration.

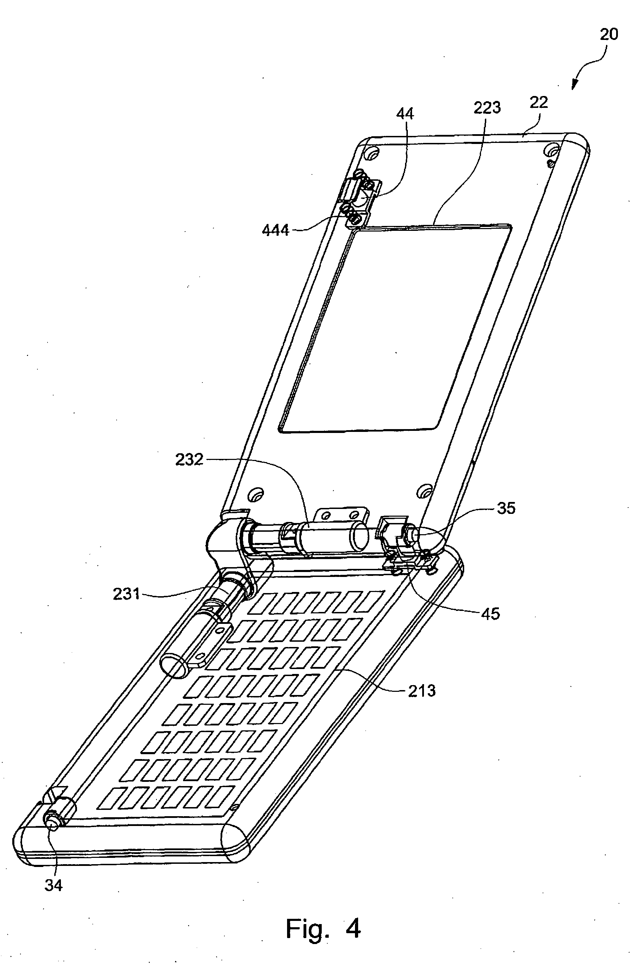

Fig. 4 is a schematic perspective view of the multi-configuration portable electronic device in Fig. 1, which is in the portrait configuration. Referring to Fig. 4, when the second joint 232 acts, the second slide 45 is coupled with the second track 35 and the first slide 44 is separated from the first track 34. The second slide 45 and the second track 35 constrain the rotation of the first joint 231 so as to guide the multi-configuration portable electronic device 20 to be in the portrait configuration. Moreover, the first slide 44 is pushed by the elastic device 444 and retracted into the second body 22. Hence, the first slide 44 would not form a protruded structure on the second body 22. The multi-configuration portable electronic device 20 is suitable for viewing a long document and utilizing the input device 213 to input a phone number and receive a phone call in the portrait configuration.

According to preferred embodiments mentioned above, the present invention has the following advantages. Firstly, the dual-axis hinge has a first joint pivotally coupled to the first body and a second joint pivotally coupled to the second body. The multi-configuration portable electronic device can be used in a landscape configuration or a landscape configuration according to the needs of users. Secondly, the multi-configuration portable electronic device has a guiding module, which can be disposed on a multi-configuration portable electronic device to prevent the axes of the dual-axis hinge from acting simultaneously and ensure the multi-configuration portable electronic device acts in a proper state. Thirdly, the first joint is not coplanar with the second joint and the guiding module has an elastic device to retract the slide into the second body. Therefore, the dual-axis hinge and the guiding module would not form a protruded structure on the multi-configuration portable electronic device.

While the invention has been described by way of example and in terms of the preferred embodiment, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A multi-configuration portable electronic device having a first body (21), a second body (22), and a dual-axis hinge module (23) configured to fold the first body (21) with respect to the second body (22) at least in two distinct axes, the multi-configuration portable electronic device (20) being **characterized in that** the dual-axis hinge module (23) comprises a first hinge and a second hinge, the first hinge being pivotally coupled to the first body (21), the second hinge being pivotally coupled to the second body (22), and the multi-configuration portable electronic device (20) further comprises:
a first guiding module (24) configured to prevent the first hinge from simultaneously acting with the second hinge, wherein the first guiding module (24) is coaxial with the first hinge, the first guiding module (24) comprising:
a first track (34) disposed in the first body (21); and
a first slide (44) connected with the second body (22), the first slide (44) having an interaction force with the track (34) so that the first slide (44) can move from the second body (22) to couple with the first track (34), wherein the first slide (44) and the first track (34) constrain a rotation of the second hinge when the first slide (44) is coupled with the first track (34); and
a second guiding module (25) having a second slide (45) and a second track (35), wherein the second guiding module (25) is coaxial with the second hinge to constrain a rotation of the first hinge when the second slide (45) is coupled with the second track (34), wherein the first hinge is not coplanar with the second hinge, and the interaction force is a magnetic force.

2. The multi-configuration portable electronic device of claim 1, wherein the guiding module (24; 25) comprises an elastic device (444) disposed between the second body (22) and the slide (44; 45) in order to retract the slide (44; 45) into the second body (22).

3. The multi-configuration portable electronic device of claim 1, wherein the track (34; 35) comprises a track base (341) disposed in the first body (21) and a cylinder (342) disposed on the track base (341).

4. The multi-configuration portable electronic device of claim 3, wherein the track base (341) has an arc-shaped track (343) disposed thereon.

5. The multi-configuration portable electronic device of claim 4, wherein the slide (44; 45) has a first U-shaped coupling portion (441) coupled with the cylinder (342) and a second U-shaped coupling portion coupled with the arc-shaped track (343).

6. The multi-configuration portable electronic device of claim 4, wherein the track (34; 35) comprises a decorative slide disposed on the arc-shaped track (343).

7. The multi-configuration portable electronic device of claim 1, wherein the second body (22) has at least one positioning pin (443) and the slide (44; 45) has at least a hole, so that the elastic device (444) and the first slide can be disposed in the second body (22).

## Patentansprüche

1. Ein tragbares elektronisches Gerät mit mehreren Konfigurationen, welches einen ersten Körper (21), einen zweiten Körper (22) und ein zweiachsiges Gelenkmodul (23) aufweist, welches dafür ausgestaltet ist, den ersten Körper (21) bezüglich des zweiten Körpers (22) mindestens um zwei eigene Achsen zu falten, wobei das tragbare elektronische Gerät mit mehreren Konfigurationen (20) dadurch charakterisiert ist, dass das zweiachsige Gelenkmodul (23) ein erstes Gelenk und ein zweites Gelenk aufweist, wobei das erste Gelenk schwenkbar mit dem ersten Körper (21) verbunden ist, das zweite Gelenk schwenkbar mit dem zweiten Körper (22) verbunden ist, und das tragbare elektronische Gerät mit mehreren Konfigurationen (20) ferner aufweist:
ein erstes Führungsmodul (24), welches dafür ausgestaltet ist, das erste Gelenk daran zu hindern, gleichzeitig mit dem zweiten Gelenk tätig zu sein, wobei das erste Führungsmodul (24) koaxial mit dem ersten Gelenk ist, wobei das erste Führungsmodul (24) aufweist:
eine erste Führung (34), welche in dem ersten Körper (21) angeordnet ist; und
ein erstes Gleitstück (44), welches mit dem zweiten Körper (22) verbunden ist, wobei das erste Gleitstück (44) eine Wechselwirkungskraft mit der Führung (34) aufweist, so dass das erste Gleitstück (44) sich von dem zweiten Körper (22) bewegen kann, um sich mit der ersten Führung (34) zu verbinden, wobei das erste Gleitstück (44) und die erste Führung (34) eine Drehung des zweiten Gelenks beschränken, wenn das erste Gleitstück (44) mit der ersten Führung (34) verbunden ist; und
ein zweites Führungsmodul (25), welches ein zweites Gleitstück (45) und eine zweite Führung (35) aufweist, wobei das zweite Führungsmodul (25) koaxial mit dem zweiten gelenk ist, um eine Drehung des ersten Gelenks zu beschränken, wenn das zweite Gleitstück (45) mit der zweiten Führung (34) verbunden ist, wobei das erste Gelenk nicht in einer gleichen Ebene wie das zweite Gelenk ist, und die Wechselwirkungskraft eine magnetische Kraft ist.

2. Das tragbare elektronische Gerät mit mehreren Konfigurationen gemäß Anspruch 1, wobei das Führungsmodul (24; 25) eine elastische Vorrichtung (444) aufweist, welche zwischen dem zweiten Körper (22) und dem Gleitstück (44; 45) angeordnet ist, um das Gleitstück (44; 45) in den zweiten Körper (22) zurückzuziehen.

3. Das tragbare elektronische Gerät mit mehreren Konfigurationen gemäß Anspruch 1, wobei die Führung (34; 35) eine Führungsbasis (341) aufweist, welche in dem ersten Körper (21) angeordnet ist, und einen Zylinder (342), welcher auf der Führungsbasis (341) angeordnet ist.

4. Das tragbare elektronische Gerät mit mehreren Konfigurationen gemäß Anspruch 3, wobei die Führungsbasis (341) eine bogenförmige Führung (343) aufweist, welche darauf angeordnet ist.

5. Das tragbare elektronische Gerät mit mehreren Konfigurationen gemäß Anspruch 4, wobei das Gleitstück (44; 45) einen ersten U-förmigen Verbindungsteil (441) aufweist, welcher mit dem Zylinder (342) verbunden ist, und einen zweiten U-förmigen Verbindungsteil, welcher mit der bogenförmigen Führung (343) verbunden ist.

6. Das tragbare elektronische Gerät mit mehreren Konfigurationen gemäß Anspruch 4, wobei die Führung (34; 35) ein dekoratives Gleitstück aufweist, welches auf der bogenförmigen Führung (343) angeordnet ist.

7. Das tragbare elektronische Gerät mit mehreren Konfigurationen gemäß Anspruch 1, wobei der zweite Körper (22) mindestens einen Positionierungsstift (443) aufweist und das Gleitstück (44; 45) mindestens eine Öffnung aufweist, so dass die elastische Vorrichtung (444) und das erste Gleitstück in dem zweiten Körper (22) angeordnet sein können.

## Revendications

1. Dispositif électronique portable multiconfiguration comportant un premier corps (21), un deuxième corps (22), et un module d'articulation à deux axes (23) configuré pour plier le premier corps (21) par rapport au deuxième corps (22) au moins selon deux axes distincts, le dispositif électronique portable multiconfiguration (20) étant **caractérisé en ce que** le module d'articulation à deux axes (23) comprend une première articulation et une deuxième articulation, la première articulation étant accouplée de manière pivotante au premier corps (21), la deuxième articulation étant accouplée de manière pivotante au deuxième corps (22), et le dispositif électronique portable multiconfiguration (20) comprend en outre :
un premier module de guidage (24) configuré pour éviter que la première articulation agisse en même temps que la deuxième articulation, dans lequel le premier module de guidage (24) et la première articulation sont coaxiaux, le premier module de guidage (24) comprenant :
une première coulisse (34) disposée dans le premier corps (21) ; et
un premier coulisseau (44) relié au deuxième corps (22), le premier coulisseau (44) ayant une force d'interaction avec la coulisse (34) de sorte que le premier coulisseau (44) peut se déplacer par rapport au deuxième corps (22) pour s' accoupler avec la première coulisse (34), dans lequel le premier coulisseau (44) et la première coulisse (34) limitent une rotation de la deuxième articulation lorsque le premier coulisseau (44) est accouplé à la première coulisse (34) ; et
un deuxième module de guidage (25) comportant un deuxième coulisseau (45) et une deuxième coulisse (35), dans lequel le deuxième module de guidage (25) et la deuxième articulation sont coaxiaux pour limiter une rotation de la première articulation lorsque le deuxième coulisseau (45) est accouplé à la deuxième coulisse (34), dans lequel la première articulation et la deuxième articulation ne sont pas coplanaires, et la force d'interaction est une force magnétique.

2. Dispositif électronique portable multiconfiguration selon la revendication 1, dans lequel le module de guidage (24 ; 25) comprend un dispositif élastique (444) disposé entre le deuxième corps (22) et le coulisseau (44 ; 45) afin de rétracter le coulisseau (44 ; 45) dans le deuxième corps (22).

3. Dispositif électronique portable multiconfiguration selon la revendication 1, dans lequel la coulisse (34 ; 35) comprend une base de coulisse (341) disposée dans le premier corps (21) et un cylindre (342) disposé sur la base de coulisse (341).

4. Dispositif électronique portable multiconfiguration selon la revendication 3, dans lequel une coulisse en forme d'arc (343) est disposée sur la base de coulisse (341).

5. Dispositif électronique portable multiconfiguration selon la revendication 4, dans lequel le coulisseau (44 ; 45) comporte une première partie d'accouplement en forme de U (441) accouplée au cylindre (342) et une deuxième partie d'accouplement en forme de U accouplée à la coulisse en forme d'arc (343).

6. Dispositif électronique portable multiconfiguration selon la revendication 4, dans lequel la coulisse (34 ; 35) comprend un coulisseau décoratif disposé sur la coulisse en forme d'arc (343).

7. Dispositif électronique portable multiconfiguration selon la revendication 1, dans lequel le deuxième corps (22) comporte au moins une broche de positionnement (443) et le coulisseau (44 ; 45) comporte au moins un trou, de sorte que le dispositif élastique (444) et le premier coulisseau peuvent être disposés dans le deuxième corps (22).
